# EUROPÄISCHE PATENTSCHRIFT

(11) **EP 1 534 984 B1**
(45) Veröffentlichungstag und Bekanntmachung des Hinweises auf die Patenterteilung: **25.07.2007**
(21) Anmeldenummer: 03794800.7
(22) Anmeldetag: 27.08.2003
(51) Int. Cl.: F16L 3/10, F16L 3/11

(54) **ROHRSCHELLE**
PIPE CLAMP
BRIDE D'ATTACHE POUR TUYAUX

(30) Priorität: 04.09.2002 DE 20214355 U
(43) Veröffentlichungstag der Anmeldung: 01.06.2005
(73) Patentinhaber: Lisega Aktiengesellschaft, 27404 Zeven (DE)
(72) Erfinder: HARDTKE, Hans-Herlof, 27404 Zeven (DE)
(74) Vertreter: Lippert, Hans-Joachim
(86) Internationale Anmeldenummer: PCT/DE2003/002851
(87) Internationale Veröffentlichungsnummer: WO 2004/025163

(56) Entgegenhaltungen:
- EP-A- 0 342 400
- DE-A- 1 575 159
- DE-A- 19 612 583
- DE-U- 1 851 413
- US-A- 3 227 406
- US-A- 4 413 799

## Beschreibung

Die Erfindung betrifft eine Rohrschelle zur Halterung von Rohrleitungen und dergleichen, bestehend aus einem hängbaren Oberteil und aus einem U-förmigen Unterteil, das an seinen Enden durch Befestigungselemente mit dem Oberteil verbindbar ist und in dem eine Rohrleitung gehaltert ist, wobei das Unterteil durch Verformung einstückig aus einem warmfesten Flachstahlgurt oder Blechstreifen gefertigt ist, das Unterteil einen Querschnitt mit mindestens einer breiteren ebenen Seitenfläche aufweist, die innen angeordnet ist und auf der die zu halternde Rohrleitung aufliegt, und das Oberteil einen Niederhalter zum Niederhalten der im Unterteil gehalterten Rohrleitung aufweist.

Rohrschellen dienen üblicherweise im Rohrleitungsbau zur Halterung einer Rohrleitung in hängender oder unterstützender Position. Ihre Abmessungen werden im wesentlichen durch Rohrweite und -Last sowie durch das in der Rohrleitung transportierte Medium bestimmt, sollten aber zur Erzielung notwendiger Traglastkapazität nicht zu groß ausgelegt sein, da sie sonst ein zu hohes Eigengewicht aufweisen und schwer handhabbar sind.

Bei warmgehenden Rohrleitungen, d.h. bei Rohrleitungen für ein Transportmedium mit erhöhter Temperatur, sind die Halterungen oder Rohranschlüsse wegen der auftretenden Temperaturbelastungen besonders stark beansprucht. Innerhalb dieser Bauteilgruppe sind hierbei die Rohrschellen die am höchsten beanspruchten und damit am meisten gefährdeten Bauteile, die statischen wie auch vornehmlich durch Schwankungen in der thermischen Ausdehnung der Rohrleitungen verursachten dynamischen Belastungen ausgesetzt sind. Warmgehende Rohrleitungen werden allgemein mit Dämmstoff umhüllt. Somit sind die Rohrschellen nach Inbetriebnahme nur noch schwer zugänglich und optisch nicht oder kaum noch kontrollierbar. Von daher ist es unerlässlich, dass die Rohrschellen so aufgebaut sind, dass ein dauerhaft fester Sitz der in der Rohrschelle lagerbaren Rohrleitung gewährleistet ist.

DE 196 12 583 A1 beschreibt eine gattungsgemäße Rohrschelle. Hierbei wird es als besonderer Vorteil angesehen, dass Oberteil und Unterteil zur Montage an der Rohrleitung durch ineinander führbare Erweiterungen und Aussparungen lose bleibend ineinander steckbar und somit auch wieder lösbar sind. Als Widerlager der Anordnung dient der Niederhalter, der notwendigerweise zum Zusammenfügen der Rohrschelle mit eingelagerter Rohrleitung und Anpassen an den Rohrleitungsdurchmesser radial zur Rohrleitung verschiebbar in einer Schraubenverbindung angeordnet ist, wobei die Schraube durch ein Langloch geführt und nach erfolgter Anpassung festgezogen wird. Nachteilig hieran ist, dass sich die Verbindung im Gebrauch lockern kann und damit ein radiales Verschieben des Niederhalters ermöglicht, sodass die darin gelagerte Rohrleitung nicht mehr fest in der Rohrschelle gelagert ist und sogar die Gefahr bestehen kann, dass sich Unterteil und Oberteil voneinander lösen können.

In DE 185 14 13 U wird eine ähnliche Verbindung über ein Langloch mit gleicher oben beschriebener-Problematik offenbart.

In den Druckschriften US 4, 413, 799 und EP 0 342 400 A werden Rohrschellen, deren Oberteil und Unterteil bzw. Oberteil und Niederhalter über Schraubverbindungen zusammengehalten werden, so dass bei einer Lockerung der Verbindung eine darin lagerbare Rohrleitung nicht mehr fest in der Rohrschelle sitzt.

Der Erfindung liegt die Aufgabe zugrunde, eine Rohrschelle bereitzustellen, die einen dauerhaft festen Sitz einer darin lagerbaren Rohrleitung erlaubt.

Die Aufgabe wird erfindungsgemäß dadurch gelöst, dass die Befestigungselemente, mit denen das Unterteil am Oberteil befestigbar ist, gleich große Bohrungen durch die breiteren Seitenflächen der Schenkelenden des U-förmigen Unterteils und durch die größeren Seitenflächen mindestens zweier Querlaschen und mindestens einen Bolzen mit den Bohrungen korrespondieren Durchmesser aufweisen, wobei der Bolzen gegen unbeabsichtigtes Lösen gesichert ist.

Hierbei sind die Schenkelenden so in das Oberteil geführt, dass sie mit ihrer breiteren Seitenfläche an jeweils einer größeren Seitenfläche der beiden Querlaschen und mit den Bohrungen deckungsgleich fluchtend anliegen und durch den Bolzen verbunden sind, der durch die Bohrungen geführt ist, mit seinen freien Enden beidseitig der Verbindung übersteht und gegen unbeabsichtigtes Lösen gesichert ist. Diese Konstruktion zeichnet sich dadurch aus, dass sie besonders einfach gestaltet ist und vor Ort leicht montiert werden kann. Dank seiner glatten Oberfläche ist der Bolzen leicht durch die Bohrungen führbar. Diese Verbindung basiert also auf einem Bolzen, der parallel zu den Längsstegen über die Länge der Rohrschelle verläuft, so dass keine Verschiebung in bezüglich zur Rohrleitung radialer Richtung erfolgen kann und somit die gelagerte Rohrleitung fest in der Rohrschelle sitzt. Die gesicherte Bolzenverbindung ist zudem nicht unerwünscht lösbar, es sei denn unter Zerstörung der Verbindungsbauteile an sich, sodass ein dauerhaft fester Sitz der Rohrleitung in der Rohrschelle gewährleistet ist. Zudem ist die Bolzenverbindung einfach zu bewerkstelligen und auch nach längerem Betrieb durch Entfernung der Sicherung in Form von Splinthen oder dergleichen und Herausziehen des Bolzens aus der Bohrung leicht lösbar. Ferner kommt, wie weiter unten detaillierter beschrieben, für eine warmgehende Rohrleitung als Werkstoff zumindest des Unterteiles ein mechanisch schwer bearbeitbarer warmfester Werkstoff in Betracht. Bei der Bolzenverbindung ist lediglich eine Bohrung in die Schenkelenden des Unterteils aus dem schwer zu bearbeitenden warmfesten Werkstoff einzubringen, wobei das Werkstoffgefüge zudem weitgehend unbeeinflusst bleibt.

Durch die einstückige Ausbildung des Unterteils wird vorteilhaft der Fertigungs- und Montageaufwand vermindert. Notwendigerweise werden bei warmgehenden Rohrleitungen mit Betriebstemperaturen von mehr als 600°C für die an der Rohrleitung anlie genden Abschnitte der Rohrschelle warmfeste Stähle verwandt. Diese Werkstoffe weisen im vergüteten Zustand geforderte Festigkeitswerte auf und sind mechanisch schwer zu bearbeiten. Durch thermische Bearbeitung, insbesondere durch Schweißen wird jedoch das Gefüge infolge des lokal hohen Wärmeinbringens in den Werkstoff im Schweißbereich so verändert, dass es erneut aufwendig wärmebehandelt werden muss, wobei ursprüngliche Festigkeiten, Zähigkeiten; Zeitstandsfestigkeiten und damit Tragfähigkeiten kaum wieder erreicht werden und somit zumindest der Schweißbereich eine Schwachstelle bilden kann. Von daher ist das Unterteil des erfindungsgemäßen Gegenstandes vorteilhaft einstückig ohne Schweißung oder durch andere Fügeverfahren und, wie weiter unten noch detaillierter ausgeführt, möglichst Gefüge schonend gefertigt.

Das Unterteil weist einen Querschnitt mit mindestens einer breiteren ebenen Seitenfläche auf, wodurch die dagegen gehalterte Rohrleitung vorteilhaft eine entsprechend breite, die Rohrleitung schonende Auflagefläche aufweist. Über die im Vergleich zu einem runden Querschnitt größere Querschnittsfläche sind zudem die im Querschnitt herrschenden Zugspannungen verringert und damit der Werkstoff geringer belastet, wodurch höhere Tragfähigkeiten erzielbar sind.

Weiterhin weist die Rohrschelle einen Niederhalter zum Niederhalten der im Unterteil gehalterten Rohrleitung. Hierdurch wird die warmgehende Rohrleitung vorteilhaft auf eine über eine noch zu beschreibende Geometrie des Niederhalters einstellbare Distanz zum Oberteil gehalten, wodurch das Oberteil thermisch geringer belastet wird und dadurch aus einem weniger warmfesten und damit kostengünstigeren und besser bearbeitbaren Werkstoff gefertigt sein kann. Ferner ist über die Werkstoffwahl und die Geometrien des Niederhalters die Lagesicherheit des Niederhalters auf die Rohrleitung einstellbar.

Bevorzugt ist das Unterteil aus einem warmfesten Chrom-Molybdän-Stahl gefertigt. Besonders bevorzugt ist das Unterteil aus X 10 CrMoVNb 9-1 gefertigt, der besonders warmfest und verzunderungsbeständig ist und im wesentlichen gleich einem üblichen Werkstoff für warmgehende Rohrleitungen ist.

In einer bevorzugten Ausbildung ist das Unterteil im wesentlichen aus dem gleichen Werkstoff wie das in ihm gelagerte Rohr gefertigt ist. Hierdurch liegt dank gleicher Ausdehnungskoeffizienten vorteilhaft ein ähnliches Ausdehnungsverhalten des Unterteils sowie des in ihm gelagerten Rohrabschnittes vor. Ferner wird einer möglichen Korrosion, die sich über den Kontakt zweier elektrogalvanisch ungleicher Metalle ergibt, vorgebeugt.

Bevorzugt weist das Gefüge des Unterteils eine Verformungsanisotropie auf, wobei sein Gefüge senkrecht zur Querschnittsebene stärker verformt ist als in der Querschnittsebene. Üblicherweise werden Werkstücke wie das Unterteil aus einem Walzblech mit entsprechenden Verformungsanisotropien in Längsrichtung entnommen, die hier ausgenutzt werden, indem die Längsrichtung des Unterteils bzw. des Flachstahlgurtes mit der Walzrichtung übereinstimmt. Diese ungleiche Verformung bewirkt vorteilhaft, dass die Zugfestigkeit senkrecht zur Querschnittsfläche und die Kerbschlagzähigkeit in der Querschnittsfläche erhöht sind, wodurch sich entsprechend die Zeitstandsfestigkeiten des Unterteils erhöhen kann.

Bevorzugt ist das Unterteil durch Kaltumformung hergestellt. Hierdurch bleibt vorteilhaft das Vergütungsgefüge weitgehend erhalten, so dass bei entsprechend geringen Verformungsgraden ein nachträgliches Vergüten nicht notwendig wird. Der entsprechende, maximale Verformungsgrad beträgt beispielsweise bei dem Werkstoff X 10 CrMoVNb 9-1 nach gängigen Regelwerken bei etwa 5%.

Besonders bevorzugt ist das Unterteil U-förmig ausgebildet, wobei zweckmäßigerweise und vorteilhaft der Radius des Halbkreises in der U-Form mit dem Radius des Querschnittes der darin gelagerten Rohrleitung korrespondiert. Die Herstellung der U-Form erfolgt zudem vorteilhaft gleichmäßig unter besonders geringen Umformgraden. Dadurch kann das Vergütungsgefüge so ungestört bleiben, dass nach der Verformung nur ein Spannungsarmglühen erforderlich ist.

In einer bevorzugten Ausbildung weist das Unterteil einen im wesentlichen rechteckigen Querschnitt auf. Hierdurch wird zum einem die Herstellung vereinfacht, da diese Querschnittsform üblicherweise bereits in Flachstahlgurten bzw. im Walzblech enthalten ist. Ferner wird hierdurch im Vergleich zu einem beispielsweise kalottenförmigen Querschnitt bei gegebener Breite und Dicke die maximale, mit höheren Kräften belastbare Querschnittsfläche erzielt.

In einer Ausbildung weist das Oberteil mindestens zwei beabstandete Längsstege und mindestens zwei beabstandete Querlaschen mit jeweils einer größeren Seitenfläche auf, wobei die Querlaschen im wesentlichen rechtwinklig zu den Längsstegen und zwischen den Längsstegen angeordnet. Vorteilhaft hierbei ist die einfache und zweckmäßige Ausgestaltung des Oberteils.

Weiter bevorzugt ausgestaltet sind die Längsstege und Querlaschen als einzelne Plattenteile gefertigt sind, die lose bleibend, formschlüssig zusammensetzbar sind und die über Verbindungselemente fixierbar. Hierdurch ist die Herstellung des Oberteils beispielsweise im Vergleich zu einer geschweißten Konstruktion erheblich vereinfacht, da die einzelnen Teile aus einer Platte gefertigt und beispielsweise vor Ort vormontiert werden können.

In einer besonders bevorzugten Ausgestaltung weisen die Querlaschen an ihren Stirnflächen jeweils mindestens einen Fortsatz auf, der im zusammengesetzten Oberteil in eine korrespondierende Ausnehmung in einem der Längsstege eingreift. Hierdurch sind die einzelnen Plattenteile besonders einfach zusammensetzbar bzw. zusammensteckbar. Der Fortsatz ist hierbei bevorzugt einstückig mit der jeweiligen Querlasche verbunden.

Noch mehr bevorzugt wird eine Ausbildung der Erfindung, bei der der Fortsatz einen rechtwinkligen Querschnitt mit einer Dicke gleich der Dicke der Querlasche aufweist, wobei der Fortsatz mit der Querlasche mindestens zwei gemeinsame Seitenflächen ausbildet, und dass der Fortsatz gerade über die äußere Seitenfläche des Längssteges hinausragt. Hierdurch ist die Fertigung der Querlasche und damit der Rohrschelle weiter vereinfacht, da der Fortsatz direkt aus einer die Querlasche bildende Platte herausgeschnitten werden kann.

Besonders bevorzugt sind die Schenkelenden jeweils zwischen zwei Querlaschen und an diesen im wesentlichen angrenzend angeordnet, wobei zur Erleichterung der Montage ein leichtes Spiel zwischen Schenkelenden und Querlaschen auftreten kann. Dadurch, dass die Schenkelenden jeweils beidseitig an einer Querlasche angrenzen, ist das Unterteil besonders stabil gelagert und gegen Verwindung gehalten.

In einer besonders bevorzugten Weiterbildung der Erfindung sind die beiden Schenkelenden mit den Querlaschen durch jeweils einen Bolzen verbunden. Hierdurch sind die Schenkelenden einzeln durch einen Bolzen an dem Oberteil befestigbar, wodurch vorteilhaft die Mitte des Oberteils konstruktiv frei bleibt und die Montage der Befestigung vereinfacht ist.

Bevorzugt erfolgt die Sicherung der Bolzen durch Sicherungssplinte bevorzugt an den freien Bolzenenden, die durch entsprechende Öffnungen geführt werden. Dies hat den Vorteil, dass bei Bedarf die Sicherungssplinte und damit der Bolzen wieder ent fernbar sind.

Vorhergehend wurde eine Befestigung des Unterteils mit dem Oberteil durch mindestens einen Bolzen beschrieben. Dennoch sind auch andere Ausführungen denkbar, wie z.B. ein Umbiegen der Schenkelenden zu kleinen Vorsprüngen, die dann auf dem Oberteil, d.h. beispielsweise von oben auf den Querlaschen aufliegen und über das Eigengewicht der Rohrleitung sowie durch den gegen die Rohrleitung anliegenden Niederhalter gegen das Oberteil gepresst werden.

In der Erfindung ist der Niederhalter bevorzugt aus einem Bandstahl oder einem Blechstreifen mit im wesentlichen rechteckigem Querschnitt gefertigt. Hierdurch kann die Herstellung kostengünstig gestaltet werden, da hier wie bei den übrigen Teilen der Rohrschelle auf marktgängige Vorprodukte zurückgegriffen werden kann.

Bevorzugt weist der Niederhalter ein in einer Ebene verlaufendes und spiegelsymmetrisch gebogenes Profil auf.

In einer weiter bevorzugten Ausbildung weist der Niederhalter eine geöffnete Form auf, deren freie Enden im wesentlichen in die gleiche Richtung verlaufen und mit dem Oberteil verbunden sind, während der Niederhalter im Bereich seiner Formmitte gegen die in dem Unterteil gehalterte Rohrleitung anliegt. Dank der Spiegelsymmetrie ist eine gleichmäßige Kraftweiterleitung von der Formmitte in freien Enden des Niederhalters und damit weiter in die Auflager des Niederhalters möglich.

In einer besonders bevorzugten Ausgestaltung weist der Niederhalter eine zum Oberteil hin geöffneten, eckige, vierfach abgekantete U-Form mit einer mittleren Seite auf, die im wesentlichen parallel zu den Längsstegen verläuft und gegen die Rohrleitung anliegt. In dem Bereich, wo der Niederhalter an der Rohrleitung anliegt, ist der Niederhalter infolge der dort stattfindenden Wärmeleitung thermisch besonders belastet. Greift der Niederhalter, wie in dieser Ausbildung, in einem sehr schmalen Bereich an der Rohrleitung an, so ist dieser thermisch besonders gefährdete Bereich vorteilhaft minimiert. Die mittlere Seite ist hierbei bevorzugt größer ausgebildet, als für die Ausbildung einer Kontaktfläche zur Rohrleitung notwendig ist. Dadurch sind vorteilhaft Ungenauigkeiten durch Montage und/oder Fertigung, die eine Verschiebung der mittleren Seite aus der Mitte heraus zur Folge hätten, ausgeglichen werden. Ferner kann der Niederhalter ähnlich einer Blattfeder im geringen, durch Abmessungen und verwendeten Werkstoff einstellbaren Umfang einer Ausdehnung des Rohrabschnittes elastisch bzw. elastisch-plastisch nachgeben bzw. entgegenwirken. Vorteilhaft ist eine derartige abgekantete U-Form wenig aufwendig durch einfaches Abkanten des Bandstahles erzielbar. Innerhalb dieser Erfindung fallen natürlich auch andere mögliche Mehrecksformen des Niederhalters, wobei eine ungerade Anzahl von Seiten stets bevorzugt ist.

In einer weiteren besonderen Ausbildung weist der Niederhalter einen an den Querschnitt der Rohrleitung angepassten und zum Oberteil hin gewölbten mittleren Bereich auf. Hierdurch wird vorteilhaft ein besonders fester Sitz des Niederhalters auf der Rohrleitung erzielt.

Der Niederhalter weist in einer weiteren vorteilhaften Ausführung die Form eines zum Oberteil hin geöffneten Kreises oder Ovals auf. Durch diese Formen, die quasi eine Rundbogenkonstruktion bilden, können vorteilhaft besonders große Kräfte übertragen werden.

Bevorzugt weist der Niederhalter an seinen freien Schenkelenden Bohrungen auf, durch die der Niederhalter an dem Oberteil befestigbar ist. Besonders bevorzugt korrespondieren diese Bohrungen mit den Bohrungen des Unterteils und den der Querlaschen. Diese Bohrungen sind hierbei zweckmäßigerweise so angeordnet, dass die Schenkelenden des Niederhalters und des Unterteils jeweils zusammen an den Querlaschen befestigbar sind.

Die Verbindungselemente, mit denen im Oberteil die zusammengesetzten und lose bleibenden Längsstege und Querlaschen zusammengehalten werden, weisen bevorzugt mindestens eine Stahlstange mit jeweils einem Gewinde an ihren freien Ende auf, wobei die Stahlstange parallel zu den Querlaschen und durch korrespondierende Öffnungen in den größeren Seitenflächen der Längsstege verlaufend angeordnet ist und mit ihren freien Enden über die Längsstege hinausragt und von außen mit Schraubmuttern verschraubbar ist. Die Schraubmuttern können hierbei durch nachfolgende Kontermuttern gegen unbeabsichtigtes Lösen gesichert sein. Hierdurch ist eine form- und kraftschlüssige Verbindung erzielbar.

In einer besonders bevorzugten Ausführung ist auf der Stahlstange zusätzlich zu beiden Enden hin mindestens eine Sicherungsmutter zur Sicherung der Schraubverbindung jeweils gegen die Innenseite der Längsstege führbar. Hierdurch kann zudem, wenn gewünscht, ein geringes Spiel zwischen den ineinander gesteckten Längsstegen und Querlaschen erzeugt werden, welches durch die innen angeordneten Schrauben eingestellt werden kann. Dieses kann jedoch auch vollständig durch entsprechendes Verschrauben der Längsstege mit den Querlaschen aufgehoben werden. Durch ein Verstemmen der Schraubverbindungen können die Schraubenmuttern zusätzlich in ihrer ihnen zugewiesenen Position fixiert werden.

Bevorzugt verlaufen die Stahlstangen in dem Bereich, in dem der Bolzen angeordnet ist, senkrecht zu dem Bolzen und unter- und/oder oberhalb des Bolzens. Hierbei ist es zur Erzeugung gleichmäßiger Spannungsverhältnisse zweckmäßig, die Stahlstangen in abwechselnder Folge und bezogen auf die Oberteilmitte in symmetrischer Abfolge unter- und oberhalb des Bolzens anzuordnen.

In einer besonderen Ausführung ist zur Sicherung des Bolzens mindestens eine Stahlstange durch den Bolzen geführt. Hierdurch kann vorteilhaft die Sicherung des Bolzens sowie die Verbindung der Längsstege und der Querlaschen in einem Arbeitsschritt erfolgen. Hierbei ist zur Sicherung eines Bolzens mindestens eine Stahlstange in dieser Doppelfunktion notwendig.

Bevorzugt weist das Oberteil mindestens eine als Querlasche ausgeführte Haltelasche auf, an der die Rohrschelle durch eine Aufhängevorrichtung aufhängbar ist, wobei die Haltelasche zweckmäßigerweise in der Mitte des Oberteils angeordnet sein sollte. Hierbei kann die Aufhängung von oben her an die Haltelasche angreifen. Besonders bevorzugt weist die Haltelasche als Verbindungspunkt zur Aufhängevorrichtung mindestens eine Bohrung mittig durch ihre größere Seitenfläche auf.

In einer weiteren Ausführungsform weist das Oberteil zwei Haltelaschen auf, die an beiden Querseiten des Oberteils angeordnet sind. Durch diese Anordnung können vorteilhaft mindestens eine Aufhängevorrichtung von oben wie auch von der Seite her an die Querlaschen angreifen.

Denkbar ist zudem eine Ausführungsform, bei der das Oberteil mindestens einen Längssteg aufweist, an dem die Rohrschelle durch eine Aufhängevorrichtung aufhängbar ist.

Das Unterteil ist in einer bevorzugten Ausbildung austauschbar an dem Oberteil befestigt. Besonders bevorzugt sind beide Teile, das Unterteil sowie der Niederhalter, in oben beschriebener Weise austauschbar am Oberteil angebracht, indem der mindestens eine Bolzen lösbar ist. Hierbei ist es zum leichteren Austausch zweckdienlich, dass die Stahlstangen zur Verbindung der einzelnen Plattenteile so angeordnet sind, dass sie einer Verschiebung des Bolzens zum Lösen des Unterteils und/oder des Niederhalters nicht im Wege stehen. Vorteilhaft können hierdurch beispielsweise schadhafte Unterteile ausgewechselt werden. Ferner ist die Rohrschelle bis auf das Unterteil und den Niederhalter vormontierbar und vor Ort an der zu halternden Rohrleitung fertigmontierbar.

Denkbar hierbei ist zudem eine Konstruktion des Oberteils, welche eine Befestigung bzw. einen Austausch verschiedener Ausführungen von Unterteilen und/oder Niederhaltern zulässt.

Der erfindungsgemäße Gegenstand wird nachfolgend anhand eines Ausführungsbeispieles und einer zugeordneten Zeichnung näher beschrieben. In der Zeichnung zeigen:
- Fig.1: eine perspektivische Aufsicht einer Rohrschelle und
- Fig.2: eine perspektivische Aufsicht der Rohrschelle mit teilweise vormontiertem Oberteil, wobei die übrigen, unmontierten Teile der Rohrschelle in Form einer Explosionszeichnung um das vormontierte Oberteil angeordnet sind.

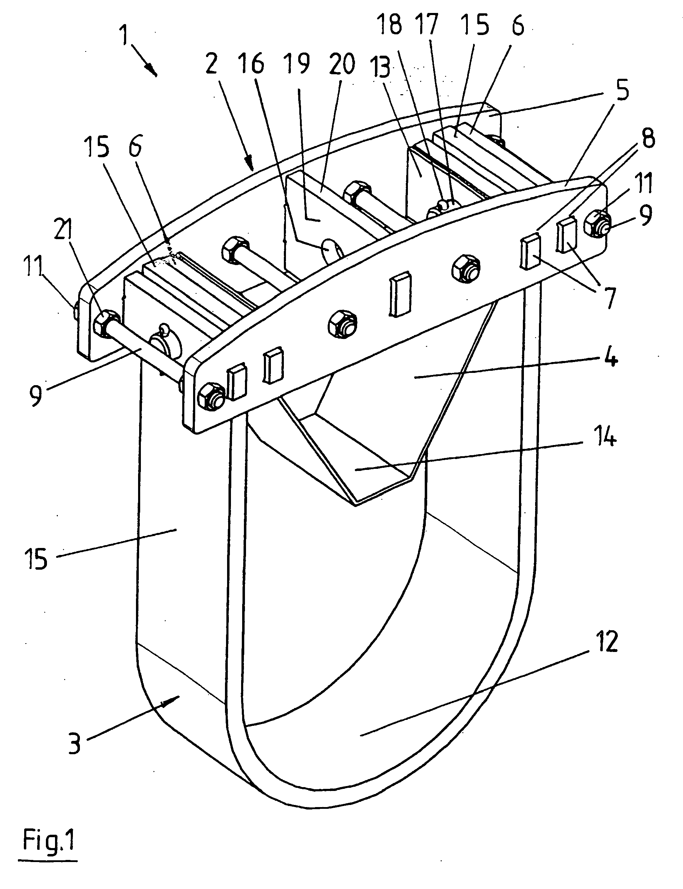

In Figur 1 ist in perspektivischer Aufsicht eine Rohrschelle 1 mit einem Oberteil 2 und einem Unterteil 3 dargestellt. Das Oberteil 2 besteht im wesentlichen aus einem Niederhalter 4 und einzelnen, lose ineinander steckbaren Plattenteile, d.h. zwei Längsstege 5, vier Querlaschen 6 und eine als Querlasche ausgeführte Haltelasche 20, wobei die Querlaschen 6 und die Haltelasche 20 an ihren Enden jeweils einen Fortsatz 7 mit rechtwinkligem Querschnitt und gleicher Dicke wie die Querlaschen 6, 20 aufweisen. Der Fortsatz 7 greift hierbei in die jeweilige korrespondierende Ausnehmung 8 in dem Längssteg 5 ein.

Die ineinander gesteckten und lose bleibenden Plattenteile werden durch von einander beabstandeten Stahlstangen 9 mit beidendigen Schraubgewinden zu einem Plattenverbund zusammengehalten, wobei die Schraubenden durch korrespondierende Öffnungen 10 in den Längsstege 5 geführt, mit Distanz wahrenden und konternde Sicherungsmuttern 21 versehen und verschraubt sind.

Das Unterteil 3 ist in dem Ausführungsbeispiel aus X 10 CrMoVNb 9-1 gefertigt. Denkbar sind hierbei natürlich auch andere Werkstoffe, die den jeweiligen Festigkeitsanforderungen genügen.

Das Unterteil 3 weist einen rechteckigen Querschnitt auf, wobei eine der beiden breiteren Seitenfläche 12 nach innen weist und als Auflagefläche für eine hier nicht dargestellte Rohrleitung dient. Denkbar sind natürlich auch andere Querschnittsformen, die jedoch für die Halterung der Rohrleitung eine ähnlich breite Auflagefläche bereitstellen sollten. Kalt aus einem Flachstahlgurt oder Blechstreifen U-förmig gebogen, weist das Unterteil 3 eine einfache Geometrie auf, die vorteilhaft mit gleichmäßigen, geringen Umformgraden so herstellbar ist, dass kein erneutes Vergüten des Werkstoffes notwendig, sondern eventuell nur ein Spannungsarmglühen erforderlich ist.

Der bandförmige Niederhalter 4 weist das Profil einer zum Oberteil 2 hin geöffnete, eckige, vierfach abgekantete U-Form mit einer mittleren Seite 14 auf, welche in einer Ebene verläuft und spiegelsymmetrisch ist, wobei der Niederhalter 4 mit beiden Schenkel 13 parallel zu den Querlaschen 6 in den Plattenverbund eingreift und mit seiner mittlere Seite 14 gegen die hier nicht dargestellte Rohrleitung anliegt.

Das Unterteil 3 greift mit seinen Schenkeln 15 in gleicher Weise wie der Niederhalter 4 in den Plattenverbund ein, wobei an den breiteren Seitenflächen 12 seiner Schenkel 15 jeweils Querlaschen 6 mit ihren größeren Seitenflächen 19 anliegen. Die Querlaschen 6 und die Enden der Schenkel 15 des Unterteiles 3 und des Niederhalters 4 weisen mittig jeweils eine gleichgroße Bohrung 16 auf, die deckungsgleich fluchtend zu einem Verbund übereinandergebracht sind und durch die ein Bolzen 17 so geführt und mit Splinten 18 gesichert ist, dass von außen nach innen eine Verbundfolge Querlasche 6/Schenkelende 15 des Unterteils 3/Querlasche 6/Schenkelende 13 des Niederhalters 4 an beiden Seiten des Oberteiles 2 entsteht. Durch die beidseitige Flankierung des Unterteils 3 durch die Querlaschen 6 wird eine das Unterteil 3 möglichst schonende und stabile Aufhängung erzielt.

Anstatt der hier gezeigten Ausführung mit zwei Bolzen 18 ist beispielsweise, was hier nicht gezeigt wird, die Verwendung nur eines Bolzens möglich, der über die Länge des Oberteils verläuft und über den das Unterteil und/oder der Niederhalter mit dem Oberteil verbunden sind. Denkbar ist auch die Einzelaufhängung der Schenkelenden des Niederhalters und des Unterteils mit jeweils einem Bolzen.

Denkbar, aber hier nicht dargestellt, sind andere Aufhängungsformen des Unterteils. Z.B. indem die Querlaschen anstatt der mittleren Bohrung etwa in gleicher Höhe an beiden Seiten eine Ausnehmung aufweisen, durch die jeweils ein Bolzen führbar ist. Diese Ausnehmungen können hierbei vorteilhaft zweckmäßigerweise durch Plasmaschweißen in die Querlaschen eingebracht werden.

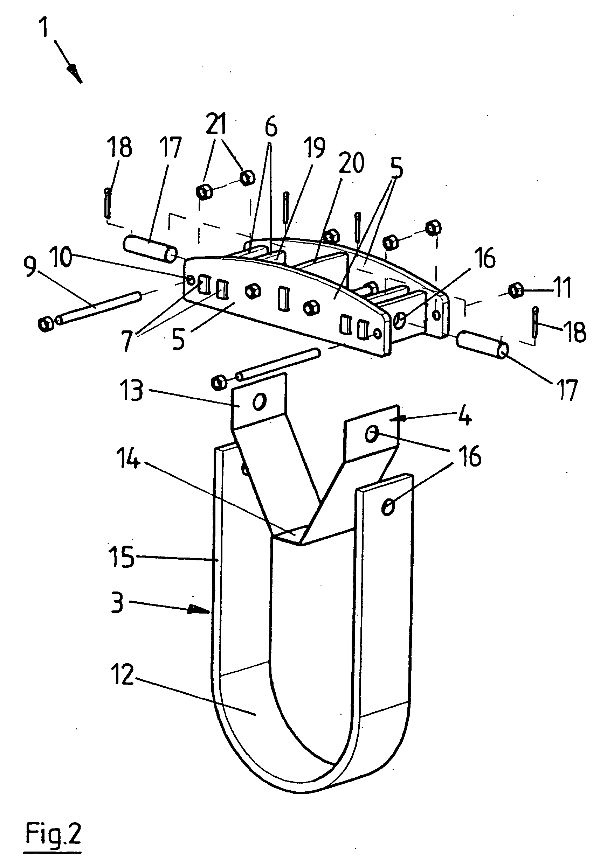

In Figur 2 ist die Rohrschelle 1 in einem vormontierten Zustand gezeigt, in welchem die Rohrschelle 1 vor Ort zur Endmontage vorteilhaft gebracht werden kann. Hierbei sind in Figur 2 die noch unmontierten Teile, d.h. das Unterteil 3, die äußeren Stahlstangen 9, den Niederhalter 4 und die Befestigungsbolzen 14 mit zugeordneten Sicherungssplinten 17 in Form einer Explosionszeichnung dargestellt.

Die in der Mitte des Oberteils 2 angeordneten Haltelasche 20 dient als Befestigungspunkt einer hier nicht dargestellten Aufhängevorrichtung, die an der Bohrung 16 angreifen kann. Aus Gründen der vereinfachten Herstellung der Rohrschelle 1 weist die Bohrung 16 durch die größere Seitenfläche 19 der Querlasche denselben Durchmesser wie die übrigen Bohrungen 16 in dem Unterteil 3, dem Niederhalter 4 und den übrigen Querlaschen 5 auf.

Selbstverständlich kann der Befestigungspunkt, hier in Form der Bohrung 16, auch in anderer, der jeweiligen Aufhängung angepassten Form ausgebildet sein.

Ferner können anstatt einer zwei Haltelaschen als Querlaschen in der Mitte des Oberteils angeordnet sein, zwischen denen zur Aufhängung der Schelle eine weitere Lasche, Schekel, Öse oder dergleichen angeordnet ist, die ähnlich wie bei der o.a. Aufhängung des Unterteils an dem Oberteil durch einen gemeinsamen Bolzen verbunden sein können.

Die Dicke der als Haltelasche ausgebildeten Querlasche kann abweichend von der Darstellung zur stärkeren Belastbarkeit auch größer als die übrigen Querlaschen ausgelegt sein.

In dem in den Figuren 1 und 2 gezeigten Ausführungsbeispiel sind die beiden äußeren Stahlstangen 9 in Höhe des Befestigungsbolzens 17 angeordnet. Dadurch ist nach erfolgter Fertigmontage der Rohrschelle 1 ein Auswechseln des Unterteils 3 und/oder des Niederhalters 4 erst nach Lösen der äußeren Stahlstangen durch Verschieben des Befestigungsbolzens nach außen hin möglich.

Denkbar, aber hier nicht dargestellt, ist ein Aufbau, nach dem die äußeren Stahlstangen und/oder die inneren Stahlstangen höher oder tiefer als die Befestigungsbolzen angeordnet sind, so dass die Befestigungsbolzen nach Lösen ihrer Sicherungssplinte nach außen und/oder nach innen herausgezogen werden können und dadurch ein leichterer Austausch des Unterteils und/oder des Niederhalters möglich ist.

### Rohrschelle

### Bezugszeichenliste

- 1: Rohrschelle
- 2: Oberteil
- 3: Unterteil
- 4: Niederhalter
- 5: Längssteg
- 6: Querlasche
- 7: Fortsatz
- 8: Ausnehmung
- 9: Stahlstange
- 10: Öffnung
- 11: Schraubenmutter
- 12: Seitenfläche
- 13: Schenkel
- 14: Mittlere Seite
- 15: Schenkel
- 16: Bohrung
- 17: Bolzen
- 18: Splint
- 19: Seitenfläche
- 20: Haltelasche
- 21: Sicherungsmutter

## Patentansprüche

1. Rohrschelle (1) zur Halterung von Rohrleitungen und dergleichen, bestehend aus einem hängbaren Oberteil (2) und aus einem U-förmigen Unterteil (3), das an seinen Enden durch Befestigungselemente mit dem Oberteil (2) verbindbar ist und in dem eine Rohrleitung gehaltert ist, wobei das Unterteil (3) durch Verformung einstückig aus einem warmfesten Flachstahlgurt oder Blechstreifen gefertigt ist, das Unterteil (3) einen Querschnitt mit mindestens einer breiteren ebenen Seitenfläche (12) aufweist, die innen angeordnet ist und auf der die zu halternde Rohrleitung aufliegt, und das Oberteil (2) ein Niederhalter (4) zum Niederhalten der im Unterteil (3) gehalterten Rohrleitung aufweist, **dadurch gekennzeichnet, dass** die Befestigungselemente, mit denen das Unterteil (3) am Oberteil (2) befestigbar ist, gleich große Bohrungen (16) durch die breiteren Seitenflächen (12) der Schenkelenden des U-förmigen Unterteils (3) und durch die größeren Seitenflächen (19) mindestens zweier Querlaschen (6) und mindestens einen Bolzen (17) mit mit den Bohrungen (16) korrespondierem Durchmesser aufweisen, wobei der Bolzen (17) gegen unbeabsichtigtes Lösen gesichert ist.

2. Rohrschelle (1) nach Anspruch 1, **dadurch gekennzeichnet, dass** das Unterteil (3) aus einem warmfesten Chrom-Molybdän-Stahl gefertigt ist.

3. Rohrschelle (1) nach Anspruch 2, **dadurch gekennzeichnet, dass** das Unterteil (3) aus X 10 CrMoVNb 9-1 gefertigt ist.

4. Rohrschelle (1) nach einem der Ansprüche 1 bis 3, **dadurch gekennzeichnet, dass** das Unterteil (3) aus im wesentlichen dem gleichen Werkstoff wie die in ihm gehalterte Rohrleitung gefertigt ist.

5. Rohrschelle (1) nach einem der Ansprüche 1 bis 4, **dadurch gekennzeichnet, dass** das Gefüge des Unterteils (3) eine Verformungsanisotropie aufweist, wobei sein Gefüge senkrecht zur Querschnittsebene stärker verformt ist als in der Querschnittsebene.

6. Rohrschelle (1) nach einem der Ansprüche 1 bis 5, **dadurch gekennzeichnet, dass** das Unterteil (3) durch Kaltverformung hergestellt ist.

7. Rohrschelle (1) nach einem der Ansprüche 1 bis 6, **dadurch gekennzeichnet, dass** das Unterteil (3) U-förmig ausgebildet ist.

8. Rohrschelle (1) nach einem der Ansprüche 1 bis 7, **dadurch gekennzeichnet, dass** das Unterteil (3) einen im wesentlichen rechteckigen Querschnitt aufweist.

9. Rohrschelle (1) nach einem der Ansprüche 1 bis 8, **dadurch gekennzeichnet, dass** das Oberteil (2) mindestens zwei beabstandete Längsstege (5) und mindestens zwei beabstandete Querlaschen (6) mit jeweils zwei größeren Seitenflächen (19) aufweist, wobei die Querlaschen (6) im wesentlichen rechtwinklig zu den Längsstegen (5) und zwischen den Längsstegen (5) angeordnet sind.

10. Rohrschelle (1) nach Anspruch 9, **dadurch gekennzeichnet, dass** die Längsstege (5) und Querlaschen (6) als einzelne Plattenteile gefertigt sind, die lose bleibend, formschlüssig zusammensetzbar sind und die über Verbindungselemente fixierbar sind.

11. Rohrschelle (1) nach Anspruch 10, **dadurch gekennzeichnet, dass** die Querlaschen (6) an ihren Stirnflächen jeweils mindestens einen Fortsatz (7) aufweisen, der im zusammengesetzten Oberteil (2) in eine korrespondierende Ausnehmung (8) in einem der Längsstege (5) eingreift.

12. Rohrschelle (1) nach Anspruch 11, **dadurch gekennzeichnet, dass** der Fortsatz (7) einen rechtwinkligen Querschnitt mit einer Dicke gleich der Dicke der Querlasche (6) aufweist, wobei der Fortsatz (7) mit der Querlasche (6) mindestens zwei gemeinsame Seitenflächen ausbildet, und dass der Fortsatz (7) gerade über die äußere Seitenfläche des Längssteges (5)hinausragt.

13. Rohrschelle (1) nach einem der Ansprüche 1 bis 12, **dadurch gekennzeichnet, dass** die Schenkelenden (15) des Unterteils (3) jeweils zwischen zwei Querlaschen (6) und an diesen im wesentlichen anliegend angeordnet sind.

14. Rohrschelle (1) nach Anspruch 13, **dadurch gekennzeichnet, dass** die beiden Schenkelenden (15) des Unterteils (3) durch jeweils einen Bolzen (17) mit den Querlaschen (6) verbunden sind.

15. Rohrschelle (1) nach Anspruch 13 oder 14, **dadurch gekennzeichnet, dass** der Bolzen (17) durch mindestens zwei Splinte (18) gesichert ist.

16. Rohrschelle (1) nach einem der Ansprüche 1 bis 15, **dadurch gekennzeichnet, dass** der Niederhalter (4) aus einem Bandstahl mit im wesentlichen rechteckigem Querschnitt gefertigt ist.

17. Rohrschelle (1) nach einem der Ansprüche 1 bis 16, **dadurch gekennzeichnet dass** der Niederhalter (4) ein in einer Ebene verlaufendes und spiegelsymmetrisch gebogenes Profil aufweist.

18. Rohrschelle (1) nach Anspruch 17, **dadurch gekennzeichnet, dass** der Niederhalter (4) eine geöffnete Form aufweist, deren freie Enden im wesentlichen in die gleiche Richtung verlaufen und mit dem Oberteil (2) verbunden sind, während der Niederhalter (4) im Bereich seiner Formmitte gegen die in dem Unterteil (3) gehalterte Rohrleitung anliegt.

19. Rohrschelle (1) nach Anspruch 18, **dadurch gekennzeichnet, dass** der Niederhalter (4) eine zum Oberteil (2) hin geöffnete, eckige, vierfach abgekantete U-Form mit einer mittleren Seite aufweist, die parallel zu den Längsstegen (5) verläuft und gegen die Rohrleitung anliegt.

20. Rohrschelle (1) nach Anspruch 18, **dadurch gekennzeichnet, dass** der Niederhalter (4) einen an den Querschnitt der Rohrleitung angepassten und zum Oberteil (2) hin gewölbten mittleren Bereich aufweist.

21. Rohrschelle (1) nach Anspruch 18, **dadurch gekennzeichnet, dass** der Niederhalter (4) die Form eines zum Oberteil (2) hin geöffneten Kreises oder Ovals aufweist.

22. Rohrschelle (1) nach einem der Ansprüche 17 bis 21, **dadurch gekennzeichnet, dass** der Niederhalter (4) an seinen freien Enden Bohrungen (16) aufweist, durch die der Niederhalter (4) an dem Oberteil (2) befestigbar ist.

23. Rohrschelle (1) nach Anspruch 22, **dadurch gekennzeichnet, dass** die Bohrungen (16) mit den Bohrungen (16) des Unterteils (3) und den der Querlaschen (6) korrespondieren und dass die freien Enden des Niederhalters (4) und des Unterteils (3) jeweils zusammen an den Querlaschen (6) befestigbar sind.

24. Rohrschelle (1) nach Anspruch 10, **dadurch gekennzeichnet, dass** die Verbindungselemente mindestens eine Stahlstange (9) mit jeweils einem an ihrem freien Ende ausgebildeten Gewinde aufweisen, wobei die Stahlstange (9) parallel zu den Querlaschen (6) und durch korrespondierende Öffnungen in den größeren Seitenflächen (19) der Längsstege (5) verlaufend angeordnet ist, die Stahlstange (9) mit ihren freien Enden über die Längsstege (5) hinausragt und die Stahlstange (9) von außen mit Schraubenmuttern (11) verschraubbar ist.

25. Rohrschelle (1) nach Anspruch 24, **dadurch gekennzeichnet, dass** auf der Stahlstange (9) zusätzlich zu beiden Enden hin mindestens eine Sicherungsmutter (21) zur Sicherung der Schraubverbindung jeweils gegen die Innenseite der Längsstege (5) führbar ist.

26. Rohrschelle (1) nach einem der Ansprüche 24 oder 25, **dadurch gekennzeichnet, dass** die Stahlstangen (9) in dem Bereich, in dem der Bolzen (17) angeordnet ist, senkrecht zu dem Bolzen (17) und unter- und/oder oberhalb des Bolzens (17) verlaufen.

27. Rohrschelle (1) nach einem der Ansprüche 24 oder 25, **dadurch gekennzeichnet dass** zur Sicherung des Bolzens (17) mindestens eine Stahlstange (9) durch den Bolzen (17) führbar ist.

28. Rohrschelle (1) nach einem der Ansprüche 1 bis 27, **dadurch gekennzeichnet, dass** das Oberteil (2) mindestens eine als Querlasche ausgeführte Haltelasche (20) aufweist, an der die Rohrschelle (1) durch eine Aufhängevorrichtung aufhängbar ist.

29. Rohrschelle (1) nach Anspruch 28, **dadurch gekennzeichnet, dass** die Haltelasche (20) als Verbindungspunkt zur Aufhängevorrichtung mindestens eine Bohrung (16) mittig durch ihre größere Seitenfläche (19) aufweist.

30. Rohrschelle (1) nach Anspruch 29, **dadurch gekennzeichnet, dass** die Haltelasche (20) quer in der Mitte des Oberteils (2) angeordnet ist.

31. Rohrschelle (1) nach Anspruch 29, **dadurch gekennzeichnet, dass** zwei Haltelaschen (20) an beiden Querseiten des Oberteils (2) angeordnet sind.

32. Rohrschelle (1) nach einem der Ansprüche 1 bis 31, **dadurch gekennzeichnet, dass** das Oberteil (2) mindestens einen Längssteg (5) aufweist, an dem die Rohrschelle (1) durch eine Aufhängevorrichtung aufhängbar ist.

33. Rohrschelle (1) nach einem der Ansprüche 1 bis 32, **dadurch gekennzeichnet, dass** das Unterteil (3) austauschbar ist.

34. Rohrschelle (1) nach einem der Ansprüche 1 bis 33, **dadurch gekennzeichnet, dass** der Niederhalter (4) austauschbar ist.

## Claims

1. Pipe clip (1) for mounting pipes and the like, comprising a suspendable upper part (2) and a U-shaped lower part (3), the ends of which can be connected to the upper part (2) by means of fastening elements and in which a pipe is mounted, where the lower part (3) is manufactured in one piece by deformation of a creep-resistant flat steel bar or strip of sheet metal, the lower part (3) displays a cross-section with at least one wider, plane lateral surface (12), which is located on the inside and on which the pipe to be mounted rests, and the upper part (2) displays a holding-down device (4) for holding down the pipe mounted in the lower part (3), **characterised in that** the fastening elements, by means of which the lower part (3) can be fastened to the upper part (2), display drilled holes (16) of equal size through the wider lateral surfaces (12) of the leg ends of the U-shaped lower part (3) and through the larger lateral surfaces (19) of at least two cross-pieces (6), and at least one bolt (17) with a diameter corresponding to the drilled holes (16), where the bolt (17) is secured against unintentional loosening.

2. Pipe clip (1) according to Claim 1, **characterised in that** the lower part (3) is made of a creep-resistant chromium molybdenum steel.

3. Pipe clip (1) according to Claim 2, **characterised in that** the lower part (3) is made of X 10 CrMoVNb 9-1.

4. Pipe clip (1) according to one of Claims 1 to 3, **characterised in that** the lower part (3) is essentially made of the same material as the pipe mounted in it.

5. Pipe clip (1) according to one of Claims 1 to 4, **characterised in that** the microstructure of the lower part (3) displays anisotropy of deformation, in which context its microstructure is deformed more strongly perpendicularly to the cross-sectional plane than in the cross-sectional plane.

6. Pipe clip (1) according to one of Claims 1 to 5, **characterised in that** the lower part (3) is manufactured by cold forming.

7. Pipe clip (1) according to one of Claims 1 to 6, **characterised in that** the lower part (3) is of U-shaped design.

8. Pipe clip (1) according to one of Claims 1 to 7, **characterised in that** the lower part (3) displays an essentially rectangular cross-section.

9. Pipe clip (1) according to one of Claims 1 to 8, **characterised in that** the upper part (2) displays at least two longitudinal webs (5), a distance apart, and at least two cross-pieces (6), a distance apart, each of which has two larger lateral surfaces (19), where the cross.-pieces (6) are arranged essentially at right angles to the longitudinal webs (5) and between the longitudinal webs (5).

10. Pipe clip (1) according to Claim 9, **characterised in that** the longitudinal webs (5) and cross-pieces (6) are manufactured as individual plate components, which can be assembled in form-fitting manner, remaining loose, and can be fixed in place via connecting elements.

11. Pipe clip (1) according to Claim 10, **characterised in that** the face surfaces of the cross-pieces (6) each display at least one extension (7), which engages a corresponding recess (8) in one of the longitudinal webs (5) in the assembled upper part (2).

12. Pipe clip (1) according to Claim 11, **characterised in that** the extension (7) displays a rectangular cross-section with a thickness equal to the thickness of the cross-piece (6), where the extension (7) forms at least two common lateral surfaces with the cross-piece (6), and **in that** the extension (7) just projects beyond the outer lateral surface of the longitudinal web (5).

13. Pipe clip (1) according to one of Claims 1 to 12, **characterised in that** the leg ends (15) of the lower part (3) are each located between two cross-pieces (6) and essentially rest against them.

14. Pipe clip (1) according to Claim 13, **characterised in that** the two leg ends (15) of the lower part (3) are connected to the cross-pieces (6) by one bolt (17) each.

15. Pipe clip (1) according to Claim 13 or 14, **characterised in that** the bolt (17) is secured by at least two split-pins (18).

16. Pipe clip (1) according to one of Claims 1 to 15, **characterised in that** the holding-down device (4) is made of strip steel with an essentially rectangular cross-section.

17. Pipe clip (1) according to one of Claims 1 to 16, **characterised in that** the holding-down device (4) displays a profile that runs in one plane and is bent in mirror-symmetrical fashion.

18. Pipe clip (1) according to Claim 17, **characterised in that** the holding-down device (4) displays an open shape, the free ends of which run in essentially the same direction and are connected to the upper part (2), while the area of the holding-down device (4) in the middle of its shape rests against the pipe mounted in the lower part (3).

19. Pipe clip (1) according to Claim 18, **characterised in that** the holding-down device (4) displays a U-shape, which is open towards the upper part (2), angular, bent four times and has a middle side that runs parallel to the longitudinal webs (5) and rests against the pipe.

20. Pipe clip (1) according to Claim 18, **characterised in that** the holding-down device (4) displays a middle area that is adapted to the cross-section of the pipe and arched towards the upper part (2).

21. Pipe clip (1) according to Claim 18, **characterised in that** the holding-down device (4) displays the shape of a circle or oval that is open towards the upper part (2).

22. Pipe clip (1) according to one of Claims 17 to 21, **characterised in that** the free ends of the holding-down device (4) display drilled holes (16), through which the holding-down device (4) can be fastened to the upper part (2).

23. Pipe clip (1) according to Claim 22, **characterised in that** the drilled holes (16) correspond to the drilled holes (16) of the lower part (3) and those of the cross-pieces (6), and **in that** the free ends of the holding-down device (4) and of the lower part (3) can in each case be fastened to the cross-pieces (6) together.

24. Pipe clip (1) according to Claim 10, **characterised in that** the connecting elements display at least one steel rod (9) with a thread on each of its free ends, where the steel rod (9) is arranged parallel to the cross-pieces (6) and running through corresponding holes in the larger lateral surfaces (19) of the longitudinal webs (5), the steel rod (9) projects beyond the longitudinal webs (5) at its free ends, and the steel rod (9) can be screwed down from the outside with screw nuts (11).

25. Pipe clip (1) according to Claim 24, **characterised in that** at least one counternut (21) for securing the screwed connection can additionally be fitted against the inner side of the longitudinal webs (5) towards both ends of the steel rod (9).

26. Pipe clip (1) according to one of Claims 24 or 25, **characterised in that**, in the area in which the bolt (17) is located, the steel rods (9) run perpendicularly to the bolt (17) and below and/or above the bolt (17).

27. Pipe clip (1) according to one of Claims 24 or 25, **characterised in that** at least one steel rod (9) can be passed through the bolt (17) to secure it.

28. Pipe clip (1) according to one of Claims 1 to 27, **characterised in that** the upper part (2) displays at least one retaining strap (20) designed as a cross-piece, on which the pipe clip (1) can be suspended by means of a suspension device.

29. Pipe clip (1) according to Claim 28, **characterised in that** the retaining strap (20) displays at least one drilled hole (16) through the middle of its larger lateral surface (19) to serve as the connecting point to the suspension device.

30. Pipe clip (1) according to Claim 29, **characterised in that** the retaining strap (20) is located transversely in the middle of the upper part (2).

31. Pipe clip (1) according to Claim 29, **characterised in that** two retaining straps (20) are located on both transverse sides of the upper part (2).

32. Pipe clip (1) according to one of Claims 1 to 31, **characterised in that** the upper part (2) displays at least one longitudinal web (5), on which the pipe clip (1) can be suspended by means of a suspension device.

33. Pipe clip (1) according to one of Claims 1 to 32, **characterised in that** the lower part (3) is replaceable.

34. Pipe clip (1) according to one of Claims 1 to 33, **characterised in that** the holding-down device (4) is replaceable.

## Revendications

1. Bride d'attache pour tuyaux (1) servant à fixer des conduites et éléments analogues, comprenant une partie supérieure (2) qui peut être accrochée et une partie inférieure (3) en forme de U qui peut être reliée à la partie supérieure (2) au niveau de ses extrémités par l'intermédiaire d'éléments de fixation et dans laquelle est maintenue une conduite, la partie inférieure (3) étant constituée d'un seul tenant produit par formage d'une ceinture en acier plat ou d'une bande de tôle thermorésistante, ladite partie inférieure (3) présentant une section transversale avec au moins une surface latérale (12) plane plus large qui est disposée à l'intérieur et sur laquelle repose la conduite à maintenir, et la partie supérieure (2) présentant un dispositif d'assujettissement (4) destiné à assujettir la conduite maintenue dans la partie inférieure (3), **caractérisée en ce que** les éléments de fixation avec lesquels la partie inférieure (3) peut être fixée au niveau de la partie supérieure (2) présentent des perçages (16) de taille identique à travers les surfaces latérales (12) plus larges des extrémités des branches de la partie inférieure (3) en forme de U et à travers les faces latérales (19) plus grandes, au moins deux barres de liaison transversales (6) et au moins un boulon (17) avec un diamètre correspondant aux perçages (16), sachant que le boulon (17) est protégé contre tout desserrage inopiné.

2. Bride d'attache pour tuyaux (1) selon la revendication 1, **caractérisée en ce que** la partie inférieure (3) est fabriquée à partir d'un acier au chrome molybdène thermorésistant.

3. Bride d'attache pour tuyaux (1) selon la revendication 2, **caractérisée en ce que** la partie inférieure (3) est en X 10 CrMoVNb 9-1.

4. Bride d'attache pour tuyaux (1) selon l'une quelconque des revendications 1 à 3, **caractérisée en ce que** la partie inférieure (3) est fabriquée à partir du matériau essentiellement identique à celui de la conduite qu'elle maintient.

5. Bride d'attache pour tuyaux (1) selon l'une quelconque des revendications 1 à 4, **caractérisée en ce que** la structure de la partie inférieure (3) présente une anisotropie de la déformation, sachant que sa structure est plus fortement déformée perpendiculairement au plan de section que dans le plan de section.

6. Bride d'attache pour tuyaux (1) selon l'une quelconque des revendications 1 à 5, **caractérisée en ce que** la partie inférieure (3) est obtenue par formage à froid.

7. Bride d'attache pour tuyaux (1) selon l'une quelconque des revendications 1 à 6, **caractérisée en ce que** la partie inférieure (3) est réalisée en forme de U.

8. Bride d'attache pour tuyaux (1) selon l'une quelconque des revendications 1 à 7, **caractérisée en ce que** la partie inférieure (3) présente une section transversale essentiellement rectangulaire.

9. Bride d'attache pour tuyaux (1) selon l'une quelconque des revendications 1 à 8, **caractérisée en ce que** la partie supérieure (2) présente au moins deux entretoises longitudinales (5) écartées, et au moins deux barres de liaison transversales (6), écartées, avec respectivement deux faces latérales (19) plus grandes, sachant que les barres de liaison transversales (6) sont disposées essentiellement perpendiculairement aux entretoises longitudinales (5) et entre les entretoises longitudinales (5).

10. Bride d'attache pour tuyaux (1) selon la revendication 9, **caractérisée en ce que** les entretoises longitudinales (5) et les barres de liaison transversales (6) sont fabriquées en tant que parties de plaque individuelles qui peuvent être réunies de façon solidaire en restant amovibles et qui peuvent être fixées par le biais d'éléments de fixation.

11. Bride d'attache pour tuyaux (1) selon la revendication 10, **caractérisée en ce que** les barres de liaison transversales (6) présentent respectivement, au niveau de leur face frontale, un prolongement (7) qui, dans la partie supérieure (2) assemblée, pénètre dans une des entretoises longitudinales (5) dans un évidement (8) correspondant.

12. Bride d'attache pour tuyaux (1) selon la revendication 11, **caractérisée en ce que** le prolongement (7) présente une section transversale rectangulaire avec une épaisseur identique à celle de la barre de liaison transversale (6), sachant que le prolongement (7) forme avec la barre de liaison transversale (6), au moins deux faces latérales communes et **en ce que** le prolongement (7) fait saillie en ligne droite à la face latérale extérieure de l'entretoise longitudinale (5).

13. Bride d'attache pour tuyaux (1) selon l'une quelconque des revendications 1 à 12, **caractérisée en ce que** les extrémités (15) des branches de la partie inférieure (3) sont disposées à chaque fois entre deux barres de liaison transversales (6) et essentiellement en contact avec celles-ci.

14. Bride d'attache pour tuyaux (1) selon la revendication 13, **caractérisée en ce que** les deux extrémités (15) des branches de la partie inférieure (3) sont reliées aux barres de liaison transversales (6) par un boulon (17).

15. Bride d'attache pour tuyaux (1) selon la revendication 13 ou 14, **caractérisée en ce que** le boulon (17) est sécurisé par au moins deux goupilles fendues (18).

16. Bride d'attache pour tuyaux (1) selon l'une quelconque des revendications 1 à 15, **caractérisée en ce que** le dispositif d'assujettissement (4) est fabriqué à partir d'un acier feuillard avec une section transversale essentiellement rectangulaire.

17. Bride d'attache pour tuyaux (1) selon l'une quelconque des revendications 1 à 16, **caractérisée en ce que** le dispositif d'assujettissement (4) présente un profilé arqué symétriquement et cheminant dans un plan.

18. Bride d'attache pour tuyaux (1) selon la revendication 17, **caractérisée en ce que** le dispositif d'assujettissement (4) présente une forme ouverte dont les extrémités libres vont essentiellement dans la même direction et sont reliées à la partie supérieure (2) alors que, dans la zone du milieu de sa forme, le dispositif d'assujettissement (4) vient en contact contre la conduite maintenue dans la partie inférieure (3).

19. Bride d'attache pour tuyaux (1) selon la revendication 18, **caractérisée en ce que** le dispositif d'assujettissement (4) présente une forme en U, pliée quatre fois, polygonale et ouverte vers de la partie supérieure (2), avec un côté central qui est parallèle aux entretoises longitudinales (5) et vient en contact contre la conduite.

20. Bride d'attache pour tuyaux (1) selon la revendication 18, **caractérisée en ce que** le dispositif d'assujettissement (4) présente une zone centrale courbée vers la partie supérieure (2) et adaptée à la section transversale de la conduite.

21. Bride d'attache pour tuyaux (1) selon la revendication 18, **caractérisée en ce que** le dispositif d'assujettissement (4) présente la forme d'un cercle ou d'un ovale ouvert vers la partie supérieure (2).

22. Bride d'attache pour tuyaux (1) selon l'une quelconque des revendications 17 à 21, **caractérisée en ce que** le dispositif d'assujettissement (4) présente, au niveau de ses extrémités libres, des perçages (16) à travers lesquels le dispositif d'assujettissement (4) peut être fixé à la partie supérieure (2).

23. Bride d'attache pour tuyaux (1) selon la revendication 22, **caractérisée en ce que** les perçages (16) correspondent avec les perçages (16) de la partie inférieure (3) et avec ceux des barres de liaison transversales (6) et **en ce que** les extrémités libres du dispositif d'assujettissement (4) et de la partie inférieure (3) peuvent être fixées à chaque fois ensemble aux barres de liaison transversales (6).

24. Bride d'attache pour tuyaux (1) selon la revendication 10, **caractérisée en ce que** les éléments de fixation présentent au moins une tige en acier (9) avec à chaque fois un filetage réalisé au niveau de son extrémité libre, sachant que la tige en acier (9) est parallèle aux barres de liaison transversales (6) et traverse des ouvertures correspondantes dans les faces latérales (19) plus grandes des entretoises longitudinales (5), que la tige en acier (9), avec ses extrémités libres, dépasse les entretoises longitudinales (5) et que la tige en acier (9) peut être assemblée par vissage, de l'extérieur, avec des écrous (11).

25. Bride d'attache pour tuyaux (1) selon la revendication 24, **caractérisée en ce qu'**au moins un contre-écrou (21) peut être guidé sur la tige en acier (9), en plus vers les deux extrémités, à chaque fois contre le côté intérieur des entretoises longitudinales (5) pour bloquer l'assemblage par vis.

26. Bride d'attache pour tuyaux (1) selon l'une des revendications 24 ou 25, **caractérisée en ce que** les tiges en acier (9) sont, dans la zone où est disposé le boulon (17), perpendiculaires au boulon (17) et en dessous et/ou au-dessus dudit boulon (17).

27. Bride d'attache pour tuyaux (1) selon l'une des revendications 24 ou 25, **caractérisée en ce qu'**au moins une tige en acier (9) peut être guidée à travers le boulon (17) pour bloquer le boulon (17).

28. Bride d'attache pour tuyaux (1) selon l'une quelconque des revendications 1 à 27, **caractérisée en ce que** la partie supérieure (2) présente au moins une patte de maintien (20) réalisée en tant que barre de liaison transversale, au niveau de laquelle la bride d'attache pour tuyaux (1) peut être accrochée par l'intermédiaire d'un dispositif de suspension.

29. Bride d'attache pour tuyaux (1) selon la revendication 28, **caractérisée en ce que** la patte de maintien (20) présente, en tant que point de liaison pour le dispositif de suspension, au moins un perçage (16) au milieu et à travers sa face latérale (19) plus grande.

30. Bride d'attache pour tuyaux (1) selon la revendication 29, **caractérisée en ce que** la patte de maintien (20) est disposée transversalement au milieu de la partie supérieure (2).

31. Bride d'attache pour tuyaux (1) selon la revendication 29, **caractérisée en ce que** deux pattes de maintien (20) sont disposées au niveau des deux côtés transversaux de la partie supérieure (2).

32. Bride d'attache pour tuyaux (1) selon l'une quelconque des revendications 1 à 31, **caractérisée en ce que** la partie supérieure (2) présente au moins une entretoise longitudinale (5) au niveau de laquelle la bride d'attache pour tuyaux (1) peut être suspendue par l'intermédiaire d'un dispositif de suspension.

33. Bride d'attache pour tuyaux (1) selon l'une quelconque des revendications 1 à 32, **caractérisée en ce que** la partie inférieure (3) peut être remplacée.

34. Bride d'attache pour tuyaux (1) selon l'une quelconque des revendications 1 à 33, **caractérisée en ce que** le dispositif d'assujettissement (4) peut être remplacé.
